(19) Europäisches Patentamt / European Patent Office / Office européen des brevets

(11) **EP 2 454 313 B2**

(12) **NEW EUROPEAN PATENT SPECIFICATION**
After opposition procedure

(45) Date of publication and mention of the opposition decision:
**21.02.2024 Bulletin 2024/08**

(45) Mention of the grant of the patent:
**21.12.2016 Bulletin 2016/51**

(21) Application number: **10742871.6**

(22) Date of filing: **01.07.2010**

(51) International Patent Classification (IPC):
***C08J 9/00*** *(2006.01)* ***C08J 9/20*** *(2006.01)*

(52) Cooperative Patent Classification (CPC):
**C08J 9/0019; C08J 9/0066; C08J 9/20;**
C08J 2203/14; C08J 2325/06

(86) International application number:
**PCT/IB2010/001630**

(87) International publication number:
**WO 2011/007228 (20.01.2011 Gazette 2011/03)**

(54) **THERMO-INSULATING EXPANDED ARTICLES AND COMPOSITIONS FOR THE PREPARATION THEREOF**

WÄRMEDÄMMENDE EXPANDIERTE ARTIKEL UND ZUSAMMENSETZUNGEN FÜR IHRE HERSTELLUNG

ARTICLES EXPANSÉS THERMIQUEMENT ISOLANTS ET COMPOSITIONS POUR LEUR PRÉPARATION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.07.2009 IT MI20091267**

(43) Date of publication of application:
**23.05.2012 Bulletin 2012/21**

(73) Proprietor: **versalis S.p.A.**
**20097 San Donato Milanese (MI) (IT)**

(72) Inventors:
- **PONTICIELLO, Antonio**
  **I-37060 Mozzecane (VR) (IT)**
- **GHIDONI, Dario**
  **I-46023 Gonzaga (MN) (IT)**

(74) Representative: **Bottero, Carlo et al**
**Barzanò & Zanardo Milano S.p.A.**
**Via Borgonuovo, 10**
**20121 Milano (IT)**

(56) References cited:
**EP-A1- 0 620 246**
**EP-A1- 2 025 700**
**WO-A1-2007/023091**
**DE-U1- 20 315 226**

Remarks:
The file contains technical information submitted after the application was filed and not included in this specification

EP 2 454 313 B2

## Description

The present invention relates to thermo-insulating expanded articles and the compositions for their preparation.

More specifically, the present invention relates to thermo-insulating expanded articles prepared from expandable vinyl aromatic polymers and to the compositions of expandable/expanded particles suitable for their preparation.

Even more specifically, the present invention relates to expanded articles made of vinyl aromatic polymers having densities ranging from 5 to 50 g/l, preferably from 10 to 25 g/l, which have excellent thermo-insulating properties, expressed by a thermal conductivity ranging from 25 to 50 mW/mK, preferably from 30 to 45 mW/mK which is generally on an average even more than 10% lower with respect to that of equivalent expanded articles obtained from non-filled materials currently on the market, for example EXTIR A-5,000 of Polimeri Europa S.p.A. These articles prove to be extremely stable to the deformations induced by exposure to solar radiations.

All the conditions mentioned in the description should be considered preferred conditions, even if not expressly indicated.

Expandable vinyl aromatic polymers and, among these, in particular, expandable polystyrene (EPS), are known products, long used for preparing expanded articles which can be adopted in various applicative areas, among which, one of the most important is thermal insulation.

These expanded products are obtained by first swelling the polymer granules, in a closed environment, impregnated with an expandable fluid, for example an aliphatic hydrocarbon such as pentane or hexane, and then molding the swollen particles contained inside a mould, by means of the contemporaneous effect of pressure and temperature. The swelling of the particles is generally effected with vapour, or another gas, maintained at a temperature slightly higher than the glass transition temperature (Tg) of the polymer.

A particular applicative field of expanded polystyrene is that of thermal insulation in the building industry where it is generally used in the form of flat sheets. The flat expanded polystyrene sheets are normally used with a density of about 25-30 g/l as the thermal conductivity of the polymer has a minimum at these values. It is not advantageous to fall below this limit, even if it is technically possible, as it causes a drastic increase in the thermal conductivity of the sheet which must be compensated by an increase in its thickness. In order to avoid this drawback, suggestions have been made to fill the polymer with athermanous materials such as graphite, carbon black or aluminium in powder form. Athermanous materials, dispersed in the end-product (sheet) are in fact capable of interacting with the radioactive thermal flow, reducing its transmission and thus increasing the insulation of the expanded materials in which they are contained. In this way, it is possible to prepare thermo-insulating articles with a lower density also at 20 g/l without having reductions in insulation to be compensated by increases in thickness.

A drawback of thermo-insulating articles, for example made of expanded polystyrene, filled with athermanous materials, in particular with graphite and/or carbon black, is that when they are exposed to solar irradiation, even for a short time, they tend to become deformed as the expanded particles, of which they consist, tend to collapse.

The Applicant has now found that it is possible to prepare thermo-insulating expanded articles, starting from EPS modified with an athermanous material, which do not have the above defect, even if they remain exposed to solar radiation also for relatively long periods of time.

DE 203 15 226 U1 discloses insulating foamed articles comprising a mixture of a plurality of pigmented styrene polymer particles and a plurality of pigmented-free styrene polymer particles sintered one another. Pigment can be graphite or carbon black.

WO 2007/023091 A1 discloses a process for producing foam moldings comprising sintering pre-foamed polystyrene particles wherein the foamed polystyrene particles are coated with a polymer comprising an athermanous compound as graphite, carbon black or coke.

EP 2 025 700 A1 discloses a process for the production of expandable polystyrene beads comprising the step of melting a preformed polystyrene resin and embedding in the melt a flame retardant system, carbon black and a foaming agent.

EP 0 620 246 A1 discloses thermoinsulating articles made of sintered polystyrene foamed particles wherein the foamed particles comprise an athermanous material, like graphite or carbon black, embedding the not expanded particles or coating the pre-foamed particles.

An object of the present invention therefore relates to thermo-insulating expanded articles, having a density ranging from 5 to 50 g/l, preferably from 10 to 25 g/l, which can be obtained from particle compositions of expandable vinyl aromatic polymers comprising:

a. 10-90% by weight, preferably 20-80%, of beads/granules of expandable vinyl aromatic polymer pigmented with an athermanous material comprising from 0.5 to 25% by weight, of coke in particle form with an average particle diameter (size) ranging from 0.5 to 100 μm, preferably from 2 to 20 μm, and a surface area, measured according to ASTM D-3037-89 (BET), ranging from 5 to 50 $m^2/g$, preferably from 5 to 20 $m^2/g$;

b. 90-10% by weight, preferably 80-20%, of beads/granules of essentially white expandable vinyl aromatic polymer, i.e. as substantially discharged

from polymerization processes.

A further object of the present invention relates to compositions of beads/granules of vinyl aromatic polymer, suitable for being used in the preparation of thermo-insulating expanded articles, comprising:

a. 10-90% by weight, preferably 20-80%, of beads/granules of expandable/expanded vinyl aromatic polymer pigmented with an athermanous material comprising from 0.5 to 25% by weight, of coke in particle form with an average particle diameter (size) ranging from 0.5 to 100 $\mu$m, preferably from 2 to 20 $\mu$m, and a surface area, measured according to ASTM D-3037-89 (BET), ranging from 5 to 50 $m^2/g$, preferably from 5 to 20 $m^2/g$;

b. 90-10% by weight, preferably 80-20%, of beads/granules of essentially white expandable/expanded vinyl aromatic polymer.

The term "vinyl aromatic polymer", as used in the present description and claims, essentially means a polymeric product (polymer and/or copolymer) obtained at least from one monomer, corresponding to the following general formula:

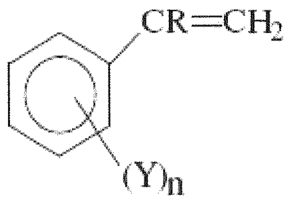

(I)

wherein R is a hydrogen or a methyl group, n is zero or an integer ranging from 1 to 5 and Y is a halogen, such as chlorine or bromine, or an alkyl or alkoxyl radical having 1 to 4 carbon atoms.

Examples of vinyl aromatic monomers having the general formula identified above, are: styrene, $\alpha$-methylstyrene, methylstyrene, ethylstyrene, butylstyrene, dimethylstyrene, mono-, di-, tri-, tetra- and penta-chlorostyrene, bromo-styrene, methoxystyrene, acetoxystyrene, etc. Preferred vinyl aromatic monomers are styrene and $\alpha$-methylstyrene.

The vinyl aromatic monomers having general formula (I) can be used alone or in a mixture up to 50% by weight with other co-polymerizable monomers. Examples of said monomers are $\alpha$-methylstyrene, (meth)acrylic acid, $C_1$-$C_4$ alkyl esters of (meth) acrylic acid such as methyl acrylate, methyl methacrylate, ethyl acrylate, ethyl methacrylate, isopropyl acrylate, butyl acrylate, amides and nitriles of (meth)acrylic acid such as acrylamide, methacrylamide, acrylonitrile, methacrylonitrile, butadiene, ethylene, divinyl benzene, maleic anhydride, etc.. Preferred co-polymerizable monomers are $\alpha$-methylstyrene, acrylonitrile and methyl methacrylate.

The term "beads/granules" of vinyl aromatic polymer, as used in the present description and claims, essentially refers to the morphological structure or form of the vinyl aromatic polymer used for preparing the thermo-insulating expanded articles, object of the present invention, both before and after expansion.

In particular, the term "beads" essentially refers to the form of the vinyl aromatic polymer which mainly derives from a preparation process in suspension, which comprises the possible dissolution/dispersion of the athermanous filler, and possibly other additives, in the vinyl aromatic monomer, as previously defined, and the subsequent suspension in water of the monomeric mix followed by polymerization in the presence of all the polymerization additives, known to experts in the field, among which the expanding agent. The "beads" thus obtained have a substantially spherical form, both before and after expansion.

The term "granule" essentially refers to the form of the vinyl aromatic polymer which mainly derives from a direct extrusion preparation process, i.e. feeding a mixture of granules of vinyl aromatic polymer, expanding agent and additives, for example the athermanous filler (as such or in the form of master-batch), directly to an extruder. Alternatively, the polymer can derive already in the molten state from a polymerization plant, subsequently adding the additives and expanding agent. The relative mixture is passed through a die for the preparation of the granule. The latter is in a substantially spheroidal form, particularly before the expansion, characterized by a form factor SF,

$$SF = 36 \cdot \pi \cdot V^2/A^3$$

wherein V is the volume of the composite expandable particle and A the corresponding surface area, ranging from 0.60 to 0.99, preferably from 0.70 to 0.98.

According to the present invention, the thermo-insulating expanded articles and relative compositions for their preparation are characterized in that they contain from 10 to 90% by weight of beads/granules of expandable/expanded vinyl aromatic polymer containing an athermanous material comprising coke in particle form.

The coke is available as a finely divided powder with a diameter of the powder particles (MT50) ranging from 0.5 to 100 $\mu$m, preferably from 2 to 20 $\mu$m and a surface area, measured according to ASTM D-3037-89 (BET), ranging from 5 to 50 $m^2/g$, preferably from 5 to 20 $m^2/g$. The dimensional (MT50) is measured with a laser granulometer and is the diameter which corresponds to 50% by weight of particles having a smaller diameter and 50% by weight of particles having a greater diameter.

The coke is produced by the pyrolysis of organic material and at least partly passes through a liquid or liquid-crystalline state during the carbonization process. The starting organic material is preferably petroleum, coal or lignite.

The coke used in the preparation of the polymeric compositions in granules, object of the present invention, is more preferably the carbonization product of the fraction of high-boiling hydrocarbons coming from the distillation of petroleum, conventionally known as heavy residual fraction. In particular, the coke is obtained starting from the coking of the heavy residual fraction, an operation carried out at a high temperature which again produces some light fractions and a solid (petroleum coke). The petroleum coke thus obtained is calcined at a temperature ranging from 1,000 to 1,600°C (calcined coke).

If a heavy residual fraction rich in aromatic components is used, a coke is produced after calcination at 1,800-2,200°C with a crystalline needle structure (needle coke).

More information on coke, the production methods and characterization of the various grades commercially available (green coke, coal-derived pitch coke, delayed coke, fluid coke, needle coke, premium coke, calcined coke, shot, spange, etc.) is available online, in the website goldbook.iupuac.org or in Pure Appl. Chem., 1995, vol. 67, Nr. 3, pages 473-506 "Recommended terminology for the description of carbon as a solid (IUPAC Recommendations 1995)".

According to the present invention, the athermanous filler of coke added to the vinyl aromatic polymer, can comprise up to 5% by weight, calculated with respect to polymer (a), for example from 0.01 to 5% by weight, preferably from 0.05 to 4.5%, of graphite and/or carbon black respectively. The graphite, natural or synthetic, can have an average particle diameter (MT50) ranging from 0.5 to 50 $\mu$m, with a surface area ranging from 5 to 50 $m^2/g$. The carbon black can have an average particle diameter ranging from 10 to 1,000 nm, and a surface area ranging from 5 to 40 $m^2/g$.

According to the present invention, the thermo-insulating expanded articles and the relative compositions for their preparation are characterized in that they contain from 90 to 10% by weight of beads or granules of essentially white expandable/expanded vinyl aromatic polymer, i.e. "as such". This is therefore the product deriving directly from polymerization in suspension or in mass. According to an alternative embodiment of the present invention, the expandable/expanded beads or granules of vinyl aromatic polymer of type (b) can also contain, in addition to the traditional additives, from 0.05 to 25% by weight, preferably from 0.5 to 10%, of a mineral filler characterized by a refraction index higher than 1.6, and a white index, as defined in "Colour Index" (third edition published by "Society of Dyers and Colourists, 1982), $\leq$ 22, preferably between 21 and 5, such as titanium dioxide, barium sulfate, silicons, talc, calcium carbonate, etc. with a particle diameter (MT50) ranging from 0.1 to 50 $\mu$m.

Conventional additives, generally used with traditional materials, such as stabilizing agents, nucleating agents, flame-retardant systems, antistatic agents, release agents, etc., can be added to the beads/granules of expandable/expanded vinyl aromatic polymers (a) and/or (b). In particular, the beads/granules can comprise a flame-retardant system, comprising from 0.1 to 8%, with respect to the polymer (a) and/or (b), of a self-extinguishing brominated additive containing at least 30% by weight of bromine and from 0.05 to 2% by weight, again with respect to the polymer (a) and/or (b), of a synergic product containing at least one C-C or O-O labile bond. Examples of brominated additives are brominated aliphatic, cycloaliphatic, aromatic compounds such as hexabromocyclododecane, pentabromomonochlorocyclohexane, pentabromophenyl allyl ether, bis-tetrabromobisphenol-A allyl ether, the latter known on the market as "chemtura BE51", of Chemtura. Synergic products which can be used are dicumyl peroxide, cumene hydroperoxide, 3,4-dimethyl-3,4-diphenyl-hexane, 3,4-dimethyl-3,4-diphenyl butane, 3,6,9-triethyl-3,6,9-trimethyl-1,4,7-triperoxynonane.

All the additives, in particular the flame-retardant system, can be added only to the polymer of beads/granules (a) or only to the polymer of beads/granules (b).

Finally, the beads or granules of expandable vinyl aromatic polymers (a) and (b), according to the present invention, contain from 1 to 10% by weight of an expanding additive which is added to the polymeric matrix, according to techniques well-known to experts in the field, during the preparation processes either in suspension or in continuous mass. The expanding agents are selected from aliphatic or cyclo-aliphatic hydrocarbons containing from 3 to 6 carbon atoms such as n-pentane, iso-pentane, cyclopentane or mixtures thereof; halogenated derivatives of aliphatic hydrocarbons containing from 1 to 3 carbon atoms, such as, for example, dichlorodifluoromethane, 1,2,2-trifluoro-ethane, 1,1,2-trifluoroethane; carbon dioxide; water; and ethyl alcohol.

The thermo-insulating expanded articles, object of the present invention, comprise from 10 to 90% by weight, preferably 20-80%, of sintered expanded particles (a) and 90-10% by weight, preferably 80-20%, of sintered expanded particles (b). They have a density ranging from 5 to 50 g/l, preferably from 10 to 25 g/l and are characterized by an excellent thermal insulation capacity expressed by a heat conductivity ranging from 25 to 50 mW/mK, preferably 30 to 45 mW/mK, which is generally on an average over 10% lower with respect to that of equivalent expanded articles obtained from non-filled materials currently on the market, for example EXTIR A-5000 of Polimeri Europa S.p.A.

Thanks to these characteristics, thermo-insulating articles can be prepared with a significant saving of material or, for example sheets can be prepared with a lesser thickness than those produced with traditional non-filled polymers, with a consequent saving of space and product.

The expandable beads/granules, of both type (a) and type (b), used for preparing the expanded articles of the present invention, consist of vinyl aromatic polymers and/or copolymers having an average molecular weight Mw ranging from 50,000 to 300,000, preferably from 70,000 to 220,000. The beads can be prepared by means of polymerization processes in aqueous suspension known, for example, in Journal of Macromolecular Science, Review in Macromolecular Chemistry and Physics C31 (263) 215-299 (1991). Alternatively the granules can be prepared with extrusion or continuous mass processes as described in international patent application WO 03/53651.

At the end of the polymerization, whether it be in suspension or extrusion or continuous mass, substantially spherical beads/granules of expandable polymer are obtained, with an average diameter ranging from 0.2 to 2 mm, preferably from 1 to 1.5 mm, in which the athermanous filler, polymers (a), and the possible mineral filler, polymers (b), are homogeneously dispersed.

Some illustrative and non-limiting examples are provided hereunder for a better understanding of the present invention and for its embodiment.

## COMPARATIVE EXAMPLE 1

A mixture is charged into a closed and stirred container, consisting of 150 parts by weight of water, 0.2 parts of sodium pyrophosphate, 100 parts of styrene, 0.25 parts of tert-butylperoxy-2-ethylhexanoate, 0.25 parts of tert-butyl perbenzoate and 6 parts of Calcinated Coke 4357 sold by the company Asbury Graphite Mills Inc. (USA), having a particle diameter MT50% of about 5 $\mu$m, a BET of about 20 $m^2/g$. 1% of EBCD (hexabromocyclododecane) and 0.3% of DCP (dicumyl peroxide) are then added to this mixture. The mixture is heated under stirring to 90°C.

After about 2 hours at 90°C, 4 parts of a solution of polyvinylpyrrolidone at 10% are added. The mixture is heated to 100°C, still under stirring, for a further 2 hours, 7 parts of a 70/30 mixture of n-pentane and i-pentane are added, the whole mixture is heated for a further 4 hours to 125°C, it is then cooled and the batch is discharged.

The granules of expandable polymer thus produced are subsequently recovered and washed with demineralized water containing 0.05% of a non-ionic surface-active agent consisting of a fatty alcohol condensed with ethylene oxide and propylene oxide, sold by Huntsman under the trade-name of Empilan 2638. The granules are then dried in a stream of warm air, with the addition of 0.02% of a non-ionic surface-active agent, a condensate of ethylene oxide and propylene oxide on a glycerine base, sold by Dow (Voranol CP4755) and are subsequently screened separating the fraction with a diameter ranging from 1 to 1.5 mm.

This fraction proved to represent 40%, 30% being the fraction between 0.5 and 1 mm, 15% the fraction between 0.2 and 0.5 mm, and 15% the gross fraction, between 1.5 and 3 mm.

0.2% of glyceryl monostearate and 0.1% of zinc stearate are then added to the fraction of 1 to 1.5 mm.

The product is pre-expanded with vapour at a temperature of 100°C, left to age for 1 day and used for the moulding of blocks (having dimensions of 1040 x 1030 x 550 mm).

The blocks were then cut to prepare flat sheets on which the thermal conductivity is measured. The thermal conductivity, measured after 5 days of residence in an oven at 70°C, was 31.0 mW/mK whereas that of a sheet having an equal density (17 g/l), prepared with a traditional reference product (EXTIR A-5000), was 40 mW/mK.

Some flat sheets (dimensions 1040x1030x40 mm) were exposed to the sun at Mantua in August for 2 days. The surface temperature reached 90°C leading to the deformation of the sheet (dimensions 960x980x40 mm). Test-samples were taken from a sheet for the fire behaviour test according to the regulation DIN 4102. The test-samples passed the test.

## COMPARATIVE EXAMPLE 2

68 parts of polystyrene N1782 produced by Polimeri Europa; 2 parts of ethylene-bis-stereamide; 30 parts of Calcinated Coke 4357 used in comparative Example 1, are mixed in a twin-screw extruder. The extruded product is used as master-batch, in the production of the expandable compositions of the present invention illustrated hereunder.

80 parts of ethylbenzene, 699.6 parts of styrene, 50.2 parts of $\alpha$-methylstyrene and 0.2 parts of divinylbenzene are fed to a stirred reactor.

170 parts of the master-batch prepared as indicated above are fed into the reactor and dissolved (total: 1,000 parts). The reaction is carried out at 125°C with an average residence time of 2 hours. The fluid composition at the outlet is then fed to a second reactor where the reaction is completed at 135°C with an average residence time of 2 hours.

The resulting composition, which is hereafter referred to as "Composition (A)", having a conversion of 72%, is heated to 240°C and subsequently fed to the devolatilizer to remove the solvent and residual monomer. The resulting polymeric composition is characterized by a glass transition temperature of 104°C, a melt flow index (MFI 200°C, 5 kg) of 8 g/10', a molecular weight Mw of 200,000 g/mol and a Mw/Mn ratio of 2.8, wherein Mw is the weight average molecular weight and Mn is the number average molecular weight.

Composition (A) is fed, from the devolatilizer, to a heat exchanger to lower its temperature to 170°C.

126 parts of polystyrene N2982 produced by Polimeri Europa, 20.9 parts of BR-E 5300 (stabilized hexabromocyclododecane, sold by Chemtura) and 3.1 parts of Perkadox 30® (2,3-dimethyl-2,3-diphenylbutane), sold by Akzo Nobel, for a total of 150 parts (additive), are fed to a second twin-screw extruder. A gear pump increases the feeding pressure of this molten additive to 260 barg. 47 parts of a mixture of n-pentane (75%) and iso-pentane (25%) are then pressurized and injected into the feeding of the additive. The mixing is completed with the use of static mixers, at a temperature of about 190°C. The composition thus obtained is described hereunder as "Composition (B)".

Composition (B) is added to 850 parts of Composition (A) coming from the heat exchanger. The ingredients are then mixed by means of static mixing elements for a calculated average residence time of 7 minutes. The composition is then distributed to the die, where it is extruded through a number of holes having a diameter of 0.5 mm, immediately cooled with a jet of water and cut with a series of rotating knives (according to the method described in US patent 7,320,585).

The pressure in the granulation chamber is 5 barg and the shear rate is selected so as to obtain granules having an average diameter of 1.2 mm. The water is used as cooling spray liquid and nitrogen is used as carrier gas.

The resulting granules are dried with a centrifugal drier and then covered with a coating as in comparative example 1.

The expansion of the granules and moulding were effected as described in comparative example 1. The thermal conductivity proved to be 31 mW/mK at a density of 16 g/l.

Some flat sheets (dimensions 1040x1030x40 mm) were exposed to the sun at Mantua in August for 2 days. The surface temperature reached 92°C leading to the deformation of the sheet (dimensions 940x960x40 mm). Test-samples were taken from a sheet for the fire behaviour test according to the regulation DIN 4102. The test-samples passed the test.

**COMPARATIVE EXAMPLE 3**

Comparative example 1 is repeated but without adding coke. The blocks prepared with this base were then cut to prepare flat sheets on which the thermal conductivity was measured. The thermal conductivity, measured after 5 days of residence in an oven at 70°C, was 41 mW/mK at 15 g/l.

Some flat sheets (dimensions 1040x1030x40 mm) were exposed to the sun at Mantua in August for 2 days. The surface temperature reached 35°C without there being any deformation of the sheet (dimensions remaining unvaried of 1040x1030x40 mm).

**EXAMPLE 1**

Sheets are prepared by mixing 50% by weight of expanded polystyrene beads prepared according to comparative example 1 (6% of coke) with 50% by weight of expanded polystyrene beads prepared according to comparative example 3.

The thermal conductivity, measured after 5 days of residence in an oven at 70°C, was 35 mW/mK at 16 g/l. Some flat sheets (dimensions 1040x1030x40 mm) were exposed to the sun at Mantua in August for 2 days. The surface temperature reached 40°C without there being any deformation of the sheet (dimensions remaining unvaried of 1040x1030x40 mm).

**EXAMPLE 2**

Example 1 was repeated but using 70% by weight of expanded beads prepared according to comparative example 1. The thermal conductivity, measured after 5 days of residence in an oven at 70°C, was 33 mW/mK at 16 g/l. Some flat sheets (dimensions 1040x1030x40 mm) were exposed to the sun at Mantua in August for 2 days. The surface temperature reached 45°C without there being any significant deformation of the sheet (dimensions remaining unvaried of 1038x1029x40 mm).

**EXAMPLE 3**

Example 2 was repeated mixing 30% by weight of expanded beads prepared according to comparative example 3 with 70% by weight of expanded beads prepared according to comparative example 2. The thermal conductivity, measured after 5 days of residence in an oven at 70°C, was 32.5 mW/mK at 16 g/l. Some flat sheets (dimensions 1040x1030x40 mm) were exposed to the sun at Mantua in August for 2 days. The surface temperature reached 50°C without there being any significant deformation of the sheet (dimensions remaining unvaried of 1037x1028x40 mm). Test samples were taken from a sheet for the fire behaviour test according to the regulation DIN 4102. The test-samples passed the test.

**Claims**

**1.** Thermal-insulating expanded articles, having a density ranging from 5 to 50 g/l, obtainable from compositions of particles of expandable vinyl aromatic polymers comprising:

a. 10-90% by weight of beads/granules of expandable vinyl aromatic polymer pigmented by means of an athermanous material comprising from 0.5 to 25% by weight of coke in particle form with an average particle size (dimensional) ranging from 0.5 to 100 μm and a surface area, measured according to ASTM D-3037-89 (BET), ranging from 5 to 50 $m^2/g$;

b. 90-10% by weight of beads/granules of essentially white expandable vinyl aromatic polymer.

**2.** The expanded articles according to claim 1, wherein the essentially white granule (b) contains from 0.05

to 25% by weight of a mineral filler **characterized by** a white index lower than 22 and a particle size of 0.1 to 50 μm.

**3.** The expanded articles according to claim 1 or 2, comprising a flame retardant system comprising from 0.1 to 8% by weight, with respect to the polymer (a) and/or (b), of a brominated self-extinguishing additive containing at least 30% by weight of bromine and from 0.02 to 2% by weight, with respect to the polymer (a) and/or (b) of a synergic agent containing at least one C-C or O-O weak bond.

**4.** Compositions of beads/granules of vinyl aromatic polymer suitable for use in the preparation of thermal-insulating expanded articles, comprising:

a. 10-90% by weight of beads/granules of expandable/expanded vinyl aromatic polymer pigmented with an athermanous material comprising from 0.5 to 25% by weight of coke in particle form with an average particle size (dimensional) ranging from 0.5 to 100 μm and a surface area, measured according to ASTM D-3037-89 (BET), from 5 to 50 $m^2$/g;
b. 90-10% by weight of beads/granules of essentially white expandable/expanded vinyl aromatic polymer.

**5.** The compositions according to claim 4, wherein the essentially white bead/granule (b) contains from 0.05 to 25% by weight of a mineral filler **characterized by** a white index lower than 22 and a particle size (dimensional) from 0.1 to 50 μm.

**6.** The compositions according to claim 4 or 5, comprising a flame retardant system including from 0.1 to 8% by weight, with respect to the polymer (a) and/or (b), of a brominated self extinguishing additive containing at least 30% by weight of bromine and from 0.02 to 2% by weight, with respect to the polymer (a) and/or (b), of a synergic agent containing at least one C-C or O-O weak bond.

**7.** The compositions according to claim 4, 5 or 6 wherein the expandable beads/granules, of both type (a) and (b), consist of vinyl aromatic polymers and/or copolymers having an average molecular weight Mw ranging from 50,000 to 300,000.

**8.** The compositions according to any of the claims from 4 to 7, wherein the expandable beads/granules are substantially spherical with an average diameter ranging from 0.2 to 2 mm, inside which the athermanous filler, polymers (a) and the possible mineral filler, polymers (b), are homogeneously dispersed.

**9.** The articles and compositions according to any of the previous claims, wherein the expandable polymer of beads/granules (a) and that of beads/granules (b) is prepared in suspension, in extrusion or in mass.

**10.** The articles and compositions according to any of the previous claims, wherein only the expandable polymer of beads/granules (a) contains the flame retardant system.

**11.** The composition according to any of the previous claims, wherein only the expandable polymer of beads/granules (b) contains the flame retardant system.

**Patentansprüche**

**1.** Wärmeisolierende, expandierte Artikel mit einer Dichte im Bereich von 5 bis 50 g/l, erhältlich aus Zusammensetzungen von Teilchen aus expandierbaren vinylaromatischen Polymeren, umfassend:

a. 10-90 Gew.-% Kügelchen/Körnchen aus expandierbarem vinylaromatischen Polymer, pigmentiert mit Hilfe eines athermanen Materials, das von 0,5 bis 25 Gew.-% Koks in Teilchenform mit einer durchschnittlichen Teilchengröße (Abmessung) im Bereich von 0,5 bis 100 μm und einer Oberflächenfäche, gemessen nach ASTM D-3037-89 (BET), im Bereich von 5 bis 50 $m^2$/g umfasst;
b. 90-10 Gew.-% Kügelchen/Körnchen aus im Wesentlichen weißem expandierbaren vinylaromatischen Polymer.

**2.** Expandierte Artikel nach Anspruch 1, wobei das im Wesentlichen weiße Körnchen (b) von 0,05 bis 25 Gew.-% eines mineralischen Füllstoffs enthält, der durch einen Weißheitsindex von weniger als 22 und eine Teilchengröße von 0,1 bis 50 μm gekennzeichnet ist.

**3.** Expandierte Artikel nach Anspruch 1 oder 2, die ein flammhemmendes System umfassen, das von 0,1 bis 8 Gew.-% bezogen auf das Polymer (a) und/oder (b) eines bromierten selbstlöschenden Additivs, das mindestens 30 Gew.-% Brom enthält, und von 0,02 bis 2 Gew.-% bezogen auf das Polymer (a) und/oder (b) eines synergistischen Mittels, das mindestens eine schwache C-C- oder O-O-Bindung enthält, umfasst.

**4.** Zusammensetzungen von Kügelchen/Körnchen aus vinylaromatischem Polymer, geeignet zur Verwendung bei der Herstellung von wärmeisolierenden, expandierten Artikeln, umfassend:

a. 10-90 Gew.-% Kügelchen/Körnchen aus expandierbarem/expandiertem vinylaromatischen Polymer, pigmentiert mit einem athermanen Material, das von 0,5 bis 25 Gew.-% Koks in Teilchenform mit einer durchschnittlichen Teilchengröße (Abmessung) im Bereich von 0,5 bis 100 μm und einer Oberflächenfläche, gemessen nach ASTM D-3037-89 (BET), von 5 bis 50 $m^2$/g umfasst;

b. 90-10 Gew.-% Kügelchen/Körnchen aus im Wesentlichen weißem expandierbaren/expandierten vinylaromatischen Polymer.

**5.** Zusammensetzungen nach Anspruch 4, wobei das im Wesentlichen weiße Kügelchen/Körnchen (b) von 0,05 bis 25 Gew.-% eines mineralischen Füllstoffs enthält, der durch einen Weißheitsindex von weniger als 22 und eine Teilchengröße (Abmessung) von 0,1 bis 50 μm gekennzeichnet ist.

**6.** Zusammensetzungen nach Anspruch 4 oder 5, die ein flammhemmendes System umfassen, das von 0,1 bis 8 Gew.-% bezogen auf das Polymer (a) und/oder (b) eines bromierten selbstlöschenden Additivs, das mindestens 30 Gew.-% Brom enthält, und von 0,02 bis 2 Gew.-% bezogen auf das Polymer (a) und/oder (b) eines synergistischen Mittels, das mindestens eine schwache C-C- oder O-O-Bindung enthält, einschließt.

**7.** Zusammensetzungen nach Anspruch 4, 5 oder 6 wobei die expandierbaren Kügelchen/Körnchen, sowohl vom Typ (a) als auch (b), aus vinylaromatischen Polymeren und/oder Copolymeren mit einem durchschnittlichen Molekulargewicht Mw im Bereich von 50.000 bis 300.000 bestehen.

**8.** Zusammensetzungen nach einem beliebigen der Ansprüche von 4 bis 7, wobei die expandierbaren Kügelchen/Körnchen im Wesentlichen kugelförmig mit einem durchschnittlichen Durchmesser im Bereich von 0,2 bis 2 mm sind, in denen der athermane Füllstoff, Polymere (a) und der mögliche mineralische Füllstoff, Polymere (b), homogen dispergiert sind.

**9.** Artikel und Zusammensetzungen nach einem beliebigen der vorhergehenden Ansprüche, wobei das expandierbare Polymer der Kügelchen/Körnchen (a) und das der Kügelchen/Körnchen (b) in Suspension, in Extrusion oder in Masse hergestellt wird.

**10.** Artikel und Zusammensetzungen nach einem beliebigen der vorhergehenden Ansprüche, wobei nur das expandierbare Polymer der Kügelchen/Körnchen (a) das flammhemmende System enthält.

**11.** Zusammensetzung nach einem beliebigen der vorhergehenden Ansprüche, wobei nur das expandierbare Polymer der Kügelchen/Körnchen (b) das flammhemmende System enthält.

## Revendications

**1.** Articles expansés thermo-isolants, présentant une masse volumique de 5 à 50 g/L, accessibles à partir de compositions de particules de polymères poly(vinyl-aromatique) expansibles comprenant:

a) de 10 à 90 % en poids de perles/granules de polymère poly(vinyl-aromatique) expansible pigmenté à l'aide d'un matériau athermane comprenant de 0,5 à 25 % en poids de coke en particules présentant une taille (dimension) moyenne de 0,5 à 100 μm et une aire spécifique, mesurée selon la norme ASTM D 3037-89 (BET) de 5 à 50 $m^2$/g,

b) et de 90 à 10 % en poids de perles/granules de polymère poly(vinyl-aromatique) expansible essentiellement blanc.

**2.** Articles expansés conformes à la revendication 1, dans lesquels les granules essentiellement blancs (b) contiennent de 0,05 à 25 % en poids d'une charge minérale **caractérisée par** un indice de blanc inférieur à 22 et une taille de particules de 0,1 à 50 μm.

**3.** Articles expansés conformes à la revendication 1 ou 2, qui comportent un système ignifugeant comprenant de 0,1 à 8 % en poids, par rapport au(x) polymère(s) (a) et/ou (b), d'un adjuvant bromé auto-extinguible contenant au moins 30 % en poids de brome, et de 0,02 à 2 % en poids, par rapport au(x) polymère(s) (a) et/ou (b), d'un agent synergique comportant au moins une liaison faible C-C ou O-O.

**4.** Compositions de perles/granules de polymères poly(vinyl-aromatique) appropriées pour être utilisées dans la fabrication d'articles expansés thermo-isolants, comprenant :

a) de 10 à 90 % en poids de perles/granules de polymère poly(vinyl-aromatique) expansible/expansé pigmenté à l'aide d'un matériau athermane comprenant de 0,5 à 25 % en poids de coke en particules présentant une taille (dimension) moyenne de 0,5 à 100 μm et une aire spécifique, mesurée selon la norme ASTM D 3037-89 (BET) de 5 à 50 m2/g,

b) et de 90 à 10 % en poids de perles/granules de polymère poly(vinyl-aromatique) expansible/expansé essentiellement blanc.

**5.** Compositions conformes à la revendication 4, dans lesquelles les perles/granules essentiellement

blancs (b) contiennent de 0,05 à 25 % en poids d'une charge minérale **caractérisée par** un indice de blanc inférieur à 22 et une taille (dimension) de particules de 0,1 à 50 $\mu$m.

**6.** Compositions conformes à la revendication 4 ou 5, qui comportent un système ignifugeant comprenant de 0,1 à 8 % en poids, par rapport au(x) polymère(s) (a) et/ou (b), d'un adjuvant bromé auto-extinguible contenant au moins 30 % en poids de brome, et de 0,02 à 2 % en poids, par rapport au(x) polymère(s) (a) et/ou (b), d'un agent synergique comportant au moins une liaison faible C-C ou O-O.

**7.** Compositions conformes à la revendication 4, 5 ou 6, dans lesquelles les perles/granules expansibles des deux types (a) et (b) sont constitués de polymères et/ou copolymères poly(vinyl-aromatique) qui présentent une masse molaire moyenne Mw de 50 000 à 300 000.

**8.** Compositions conformes à l'une des revendications 4 à 7, dans lesquelles les perles/granules expansibles sont sensiblement sphériques et présentent un diamètre moyen de 0,2 à 2 mm, et au sein desquelles la charge athermane, les polymères (a), l'éventuelle charge minérale et les polymères (b) sont dispersés de manière homogène.

**9.** Articles et compositions conformes à l'une des revendications précédentes, dans lesquel(le)s le polymère expansible des perles/-granules (a) et celui des perles/granules (b) ont été préparés en suspension, en extrusion ou en masse.

**10.** Articles et compositions conformes à l'une des revendications précédentes, dans lesquel(le)s seul le polymère expansible des perles/granules (a) contient le système ignifugeant.

**11.** Composition conforme à l'une des revendications précédentes, dans laquelle seul le polymère expansible des perles/granules (b) contient le système ignifugeant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 20315226 U1
- WO 2007023091 A1
- EP 2025700 A1
- EP 0620246 A1
- WO 0353651 A
- US 7320585 B


### Non-patent literature cited in the description


- *Pure Appl. Chem,* 1995, vol. 67 (3), 473-506
- Colour Index. Society of Dyers and Colourists, 1982
- Review in Macromolecular Chemistry and Physics. *Journal of Macromolecular Science,* 1991, vol. 31 (263), 215-299